# EUROPEAN PATENT SPECIFICATION

(11) **EP 2 577 208 B1**
(45) Date of publication and mention of the grant of the patent: **15.04.2015**
(21) Application number: 11728906.6
(22) Date of filing: 19.05.2011
(51) Int. Cl.: F28D 7/16, F28F 11/00, F28D 21/00

(54) **A FLUE GAS AIR PREHEATER, AND A METHOD FOR INSTALLATION, AS WELL AS AN AIR PIPE COMPONENT FOR A FLUE GAS AIR PREHEATER**
RAUCHGAS-LUFT-VORWÄRMOFEN UND VERFAHREN FÜR DEN EINBAU SOWIE EINE LUFTROHRKOMPONENTE FÜR EINEN RAUCHGAS-LUFT-VORWÄRMOFEN
DISPOSITIF DE PRÉCHAUFFAGE D'AIR DE GAZ DE CARNEAU, ET PROCÉDÉ POUR SON INSTALLATION, AINSI QU'UN COMPOSANT DE CONDUITE D'AIR POUR UN DISPOSITIF DE CHAUFFAGE D'AIR DE GAZ DE CARNEAU

(30) Priority: 28.05.2010 FI 20105604
(43) Date of publication of application: 10.04.2013
(73) Proprietor: Valmet Technologies Oy, 02150 Espoo (FI)
(72) Inventor: NICKULL, Jan, FI-33450 Siivikkala (FI); KAINU, Vesa, FI-36200 Kangasala (FI)
(74) Representative: Tampereen Patenttitoimisto Oy
(86) International application number: PCT/FI2011/050457
(87) International publication number: WO 2011/148044

(56) References cited:
- EP-A1- 0 120 277
- EP-A1- 0 470 893
- EP-A2- 0 795 731
- WO-A1-99/10696
- DE-B- 1 007 792
- FR-A- 483 777
- FR-A1- 2 282 097
- US-A- 4 694 549

## Description

### Field of the invention

The invention relates to a method for the installation of air pipes of a flue gas air preheater according to the preamble of claims 1 or 8. Furthermore, the invention relates to a flue gas air preheater according to the preamble of claims 10 or 13. The invention also relates to an air pipe component for a flue gas air preheater according to the preamble of claim 14. Such methods or apparatuses are known from FR 2 282 097 A1.

### Background of the invention

For preheating combustion air for a large solid fuel boiler, flue gas air preheaters (German *Luftvorwärmer,* LUVO) are typically used, in which the heating medium, *i.e.* flue gas, flows outside heat exchanger pipes, and the medium to be heated, *i.e.* air, flows inside the heat exchanger pipes. The heat exchanger pipes, which are also called air pipes in this description, are typically placed horizontally in the flue gas duct, and a large number of heat exchanger pipes constitutes a heat exchanger unit. Heat exchanger units on different height levels are connected to each other by air ducts placed outside the flue gas duct. There are also configurations, in which the flue gas flows inside the heat exchanger pipes, and the heat exchanger pipes are vertical.

In known configurations, the temperature of the air pipe is significantly low on the air inlet side, at the initial end of the air pipe. The considerable cooling effect of air at the inlet end of the air pipe is due to the fact that at the point of inflow, the heat transfer coefficient of the flow is multiple compared to the developed flow deeper in the pipe. Furthermore, the air supplied to the air pipe has not yet been substantially warmed at the initial end of the air pipe. Strong cooling causes a relatively low material temperature on the air inlet side of the heat exchanger unit of the preheater, in spite of the fact that the average temperature of the flue gases is relatively high. Thus, at the surface of the heat exchanger unit, particularly on the surface of the air pipes, a temperature can be achieved that corresponds to the acid dew point of the flue gases. Reaching the acid dew point, in turn, causes strong corrosion in the cold heat exchanger structure because of condensed water and sulphuric acid, and eroding through in a short time, particularly with difficult fuels. In particular, the joint between the coldest air pipe and the end plate connected to it may be corroded, if the temperature of the material is too low. Said end plate is simultaneously part of the wall of the flue gas duct.

At the cold end (air inlet side, initial end of the air pipe) of the coldest air pipes, various insulation sleeves fitted around the outer surface of the air pipe have been provided to prevent corrosion of the air pipe. In addition, various protective sleeve structures, for example with thermal insulations, have been placed inside the air pipe.

After the corrosion has, notwithstanding the precautions, proceeded too far, the method of prior art has been to remove the air pipe from service by blocking it. However, this is merely a temporary remedy. Typically, however, repairing involves removing the whole heat exchanger unit containing hundreds of air pipes, the so-called LUVO block, from the flue gas duct and replacing the whole LUVO block. It is obvious that said operation is very demanding, because the weight of the heat exchanger unit may be even 150 tons, and the length of the air pipe may be, for example, 6 m. In connection with the replacement, new air pipes are connected at their both ends to the two end plates of the LUVO block.

It is obvious that the replacement and repair of the whole LUVO block will cause a long downtime of the boiler, and the work cannot be done in connection with other, shorter interruptions in operation.

### Brief summary of the invention

In the following, a solution will be presented to avoid the replacement of the whole LUVO block in connection with the repair and replacement of air pipes.

To achieve this aim, the method for the installation of air pipes of a flue gas air preheater according to the invention is characterized in what will be presented in claim 1. The flue gas air preheater according to the invention is characterized in what will be presented in claim 10. The air pipe component for a flue gas air preheater according to the invention is characterized in what will be presented in claim 15.

In one embodiment of the implementation, the air pipe to be replaced is cut at its one end, at least, to a given length in such a way that a new air pipe is fixed between the end plate and the remaining air pipe. Typically, the end plate is also replaced by a new one, at least in part.

The advantage of the presented solution is that the whole LUVO block does not need to be replaced. With this solution, the portion of the air pipes to be replaced may typically be only 15 tons of the total weight of the LUVO block.

The new and old air pipes are joined to each other in a desired way, for example by forming the end of the new air pipe as a right cone, for example by a machine tool for the pipe end. The cone is fitted tightly into the end of the old air pipe, making use of the conical shape and an installation method whose principles partly correspond to the method of installation of a sleeve that will be described in the following. The replacement of merely the end or a part of the air pipe is performed more easily and faster than the replacement of the whole air pipe.

According to a particular example, the new air pipe is connected to a fastening sleeve that is tubular and is placed inside the new and the old air pipe. By means of the fastening sleeve, a single continuous air pipe is formed. In one example method of fixing, the principle is particularly that the tightness of the fixing between the fastening sleeve and the old air pipe is based on mechanical sealing in which the old air pipe is not connected to the fastening sleeve by welding. In practice, welding would be impossible, because the air pipes are placed close to each other in the LUVO block.

According to some examples, the sealing is provided either by the conical shape of the fastening sleeve, or by one or more O rings of the fastening sleeve, or by both. The conical outer jacket of the fastening sleeve is sealed against the inner surface of the old air pipe when the installation is performed by applying a sufficient force. The new air pipe is then connected to the end plate in the desired way.

In one example, the fastening sleeve is a half-finished tubular fastening sleeve blank that is connected to the new air pipe, typically by welding, in such a way that part of the fastening sleeve blank is left inside the end of the new air pipe and part of the fastening sleeve blank remains as an extension outside the end of the new air pipe. The fastening sleeve blank is machined, typically by lathing, when it is connected to the new air pipe. In this way, simple measures can be taken to secure that the new air pipe, the installed fastening sleeve and the cylindrical or conical outer surface of the fastening sleeve are concentric. In this way, it is particularly avoided that the fastening sleeve would be fixed to the old air pipe in a slanted position, which would, in turn, cause problems in securing the mechanical sealing.

In connection with the replacement of the air pipe, an air guide sleeve can be inserted in the initial end of the air pipe, the air guide sleeve being made of a poorly heat conductive material and designed to diminish turbulence in the air flow. The air guide sleeve is adapted to guide the combustion air to be heated in contact with the inner surface of the air pipe at a distance from the initial end of the air pipe. In this way, the cooling of the outer surface of the initial end of the air pipe and the warming of air in the air pipe takes place over a longer distance and more evenly.

The tubular fastening sleeve can even be installed in new LUVO blocks, in which case the fastening sleeve is used for connecting new air pipes to each other. This will facilitate the replacement of the air pipe later. When there is a need for replacing the air pipe, the initial end of the air pipe, with the sleeve, is detached from the rest of the air pipe without cutting. In this way, the cutting point of the air pipe can be straightened and the inner surface can be calibrated to the desired length more easily and with fewer measures than by performing the cutting of the air pipe by shearing, for example with a rotary cut off tool.

In an example, the initial end of the air pipe or other points which are critical in view of corrosion can be provided by the above-presented system with a material that differs from the material of the rest of the air pipe. In this way, it is possible to have a significant effect on the total lifetime of the pipe or to perform testing of materials.

In one example, the materials of the fastening sleeve and the air pipe are selected, in view of thermal expansion, in such a way that sufficient sealing is maintained at different temperatures. In particular, the material of the fastening sleeve preferably has a greater thermal expansion coefficient than the air pipe.

### Description of the drawings

In the following, the invention will be described in more detail with reference to the appended principle drawings, in which
- Fig. 1: shows a system utilizing the combustion of solid fuel in a principle view,
- Fig. 2: shows an embodiment of a flue gas air preheater in a principle view,
- Fig. 3: shows a cross-section of one air pipe and an air guide sleeve in a flue gas air preheater,
- Fig. 4: shows the placement and structure of air pipes in a flue gas air preheater,
- Fig. 5: shows an example of a fastening sleeve blank, in a side view,
- Fig. 6: shows an example of a fastening sleeve connected to an air pipe, and
- Fig. 7: shows an example of a fastening sleeve connected to an air pipe consisting of two different portions.

For the sake of clarity, the drawings only show the details necessary for understanding the implementation. The structures and details which are not necessary for understanding the implementation but are obvious for a person skilled in the art, and in which it is possible to apply principles or devices known as such, have been left out from the drawings.

### Detailed description of the embodiments of the invention

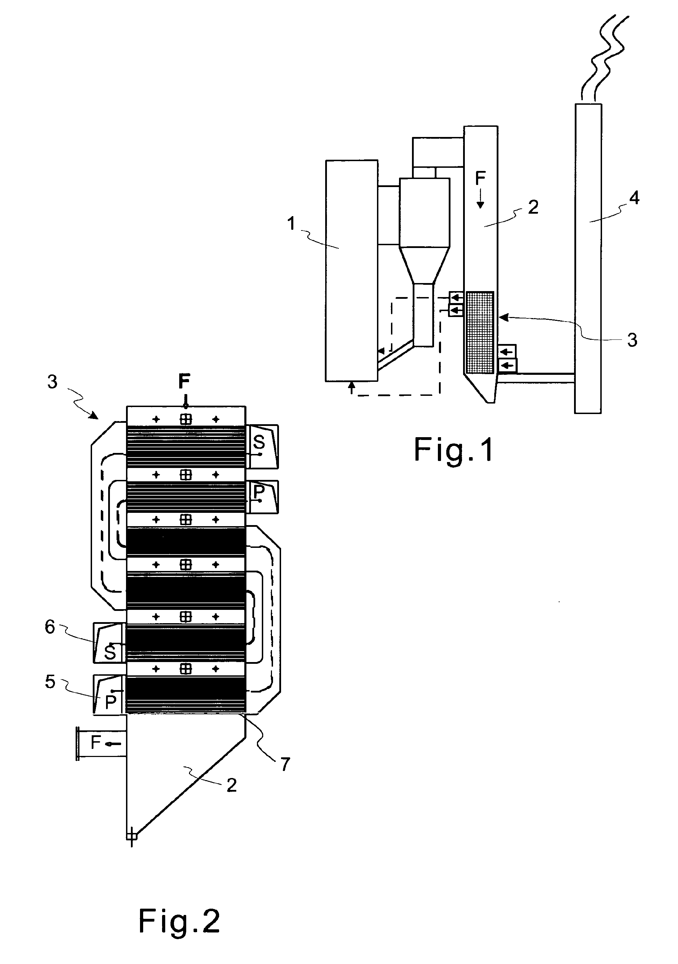

Figure 1 shows, in a principle view, a system for producing and utilizing thermal energy, for example a boiler, that makes use of combustion of solid fuel. The system comprises a furnace 1, in which the combustion of the fuel takes place, a flue gas duct 2, to which the flue gases formed in the combustion are led, a flue gas air preheater 3, by which the combustion air used in the combustion is heated before it is introduced in the furnace, and a stack 4. The preheater 3 is placed in the flue gas duct 2. As can be seen from the figure, the preheater 3 is placed at the terminal end of the flue gas duct 2 in the flow direction F of the flue gases.

Figure 2 shows an embodiment of the preheater 3 in more detail. In this example, the air flows S, P to be heated are guided into the preheater 3 from air supply areas 5, 6 in the lower part. The heated air is discharged from the upper part of the preheater 3. In the example, the preheater 3 comprises two air circulations, *i.e.* a primary air circulation P and a secondary air circulation S. Both air circulations P, S comprise air pipes 7 which are placed horizontally in the flue gas duct 2, and the heat exchanger units on different levels are connected to each other by channels outside the flue gas duct 2.

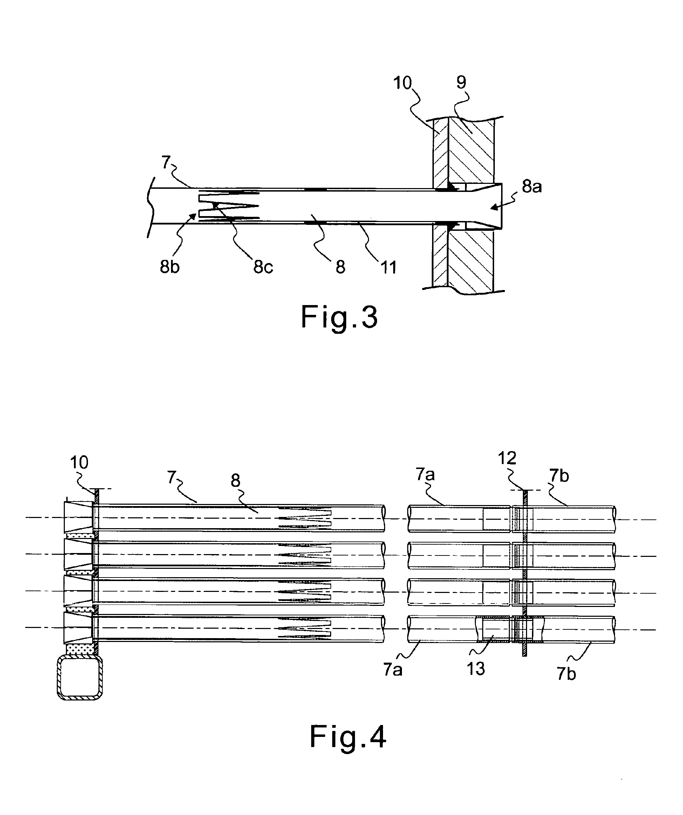

Figure 3 shows the initial end of one air pipe of the flue gas air preheater 3 in a cross-sectional view. A heat exchanger unit in a typical vertical flue gas duct 2 comprises 20 to 30 pipes 7 on top of each other and about a hundred pipes adjacent to each other. Figure 3 shows the initial end of the air pipe 7, and in this example, an air guide sleeve 8 is also installed in it. In the example, the air pipe 7 extends a short distance (about 1/3 of the length) into an insulation layer 9 that surrounds the flue gas duct 2. The air pipe 7 is, for example, welded or mangled in a gas tight manner to the end plate 10 or the wall of the flue gas duct 2. In the example, the air guide sleeve 8 extends through the insulation layer 9, and the outer surface of the air guide sleeve is connected tightly to the end of the air pipe 7. For example, silicone can be used for sealing. The inflow end 8a of the air guide sleeve 8, *i.e.* the inlet of the air flow, is shaped as a funnel in this example. In the embodiment shown in Fig. 3, a clearance 11 is provided between the air guide sleeve 8 and the air pipe 7. The structure of the terminal end of the air pipe 7 corresponds to that shown in Fig. 3, but the air guide sleeve is not necessary.

The length of the air guide sleeve 8 is typically more than 3 to 8 times the diameter of the air pipe 7. The diameter of the air pipe 7 is, for example, about 50 mm. The outer end 8b of the air guide sleeve 8 that is placed inside the air pipe 7 is shaped so as to induce no significant turbulence in the air flow discharging from the air guide sleeve. In the example, the end 8b of the air guide sleeve is shaped so that the portion of the wall from the surface area limited by the outer circumference of the pipe decreases towards the end 8b.

Figure 4 shows in more detail some of the air pipes 7 in the heat exchanger unit of the preheater 3, particularly their initial end which is placed between an intermediate support 12 in the preheater and the end plate 10. The lowest air pipe 7 is shown opened, to make the fastening sleeve 13 more visible. The distance between the intermediate support 12 and the end plate 10 is, for example, 1300 mm, but it may vary. The initial ends of the air pipes 7 have been removed by cutting the air pipe 7 and by removing part of the air pipe 7. The remaining portion of the air pipe 7 forms, in this description, a part that is called the old air pipe 7b. The central part and the terminal end of the air pipe 7 remain in place. Typically, the old air pipe 7b extends through the intermediate support 12. That portion of the air pipe 7 which is to be replaced constitutes the part that is called the new air pipe 7a in this description. The initial end of the air pipe 7 is a separate new air pipe 7a which is connected to the old pipe 7b by means of a tubular fastening sleeve 13. The new and old air pipes are joined to each other in such a way that they are as parallel and concentric as possible. The initial end of the air pipe 7 is connected to the end plate 10.

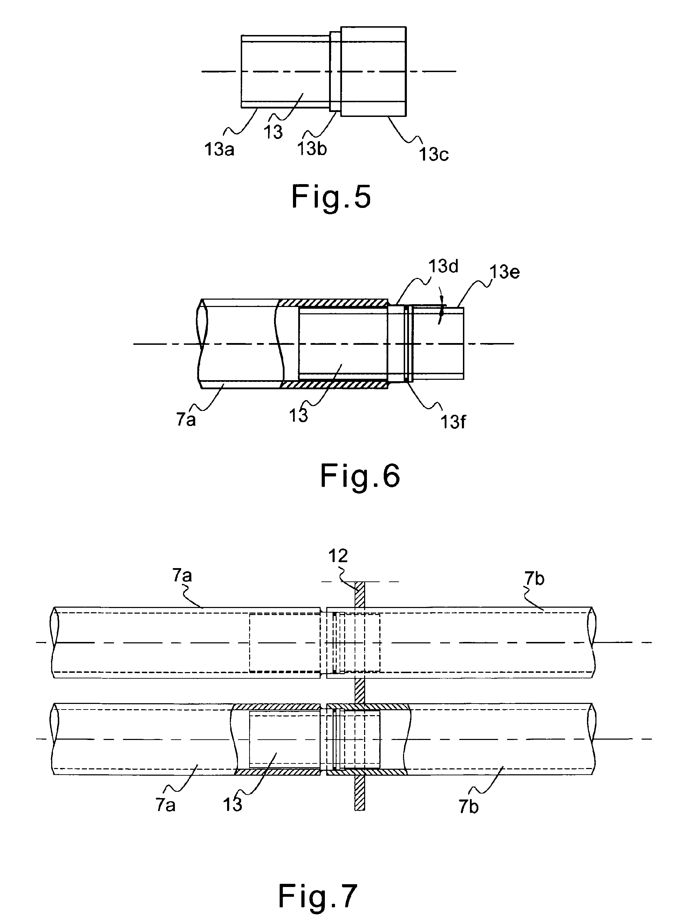

Figure 5 shows, in more detail, an example of a fastening sleeve blank 13 whose first end 13a is ready machined, for example by lathing, so that it could be installed in the new air pipe 7a as shown in Fig. 6. The fastening sleeve blank 13 is made of, for example, a tube, and its material is steel. The fastening sleeve blank 13 is a tubular, rotationally symmetrical piece, whose outer surface is preferably a straight cylinder in that portion of the first end 13a which is placed inside the new air pipe 7a. The opposite, second end 13c of the fastening sleeve blank 13 is larger than the first end 13a in diameter, so that the fastening sleeve blank would contain sufficient material for machining. Consequently, the second end 13c comprises the material blank to be machined and fitted to match the method of fixing. Preferably, a collar 13b is also provided between the ends 13a, 13b, which collar has a diameter larger than the first end 13a and against which the end of the new air pipe 7a is placed. The collar 13b and the new air pipe are sealed by welding them together. Preferably, the diameter of the collar 13b is smaller than the outer diameter of the new air pipe 7a. The outer diameter of the first end 13a corresponds substantially to the inner diameter of the new air pipe 7a.

The new air pipe with the fastening sleeve blank 13 is connected to a suitable machine tool, for example a lathe, and the second end 13c of the fastening sleeve blank 13 is machined to be parallel and concentric with the new air pipe 7a. During machining, the diameter of the second end 13c of the fastening sleeve blank 13 is reduced, and either a straight cylinder is formed, whose outer diameter corresponds substantially to the inner diameter of the old air pipe 7b, or a right cone 13d is formed, whose outer diameter decreases in the direction towards the outer second end 13c of the fastening sleeve blank 13 which is placed inside the old air pipe 7b, as shown in Fig. 7. Typically, after cutting off the air pipe 7, wherein the old air pipe 7b remains, the end of the old air pipe 7b must be straightened and calibrated in view of its inner surface, to secure reliable installation and sealing. If necessary, a seam formed in connection with the manufacture of the air pipe 7 is removed from the inner surface. The straightening and calibration applies to a portion of 15 mm or longer on the inner surface of the old air pipe 7b. The straightening and calibration can be performed by methods known as such, for example by a machine tool for a tube end.

One or more gaskets 13f, which are preferably flexible, are provided between the fastening sleeve 13 and the air pipe 7. On the surface of the cone 13d or cylinder, or at its direct vicinity, one or more grooves are provided, in which a gasket 13f, for example an O-ring, can be placed between the fastening sleeve 13 and the air pipe 7, to seal the clearance between the fastening sleeve 13 and the air pipe 7. The outer diameter of the cone 13d and the inclination of the flank are selected so that the end of the old air pipe 7b will adhere tightly and with a sufficient frictional force to the fastening sleeve 13, when the fastening sleeve 13 connected to the new air pipe 7a is forced into the old air pipe 7b. The forcing is performed by methods known as such, for example by placing a mandrel at the end of the new air pipe 7a and by hitting with a hammer.

The inclination of the cone 13d is, in one example, only 1 to 2 degrees. Behind the cone or cylinder, in the outermost part of the second end 13c, for example another straight cylinder 13e can be machined, whose outer diameter is suitably selected according to the size of the air pipe.

Before joining the old and new air pipe, the end plate 10 has been fixed in place and the new air pipe 7a has been inserted in an opening in the end plate 10. After the parts of the air pipe have been joined together, the air pipe 7 is fastened to the end plate 10, for example by mangling or welding in such a way that no gaps leading to the flue gas duct are left between the end plate 10 and the air pipe 7. In some examples, a protective sleeve is also placed around the air pipe 7, extending through the end plate and welded to the end plate. Various gaskets can be applied between the protective sleeve, the air guide sleeve and the air pipe to prevent leaks of flue gases out of the flue gas duct.

As already mentioned above, it is also possible to manufacture totally new heat exchanger units for a preheater 3 in the above-presented way. In such a case, the whole air pipe is made by the above-described method by using parts of the air pipe but excluding the cutting. Thus, a component is used which comprises a fastening sleeve and a new air pipe, or a fastening sleeve blank and an air pipe. Consequently, a corresponding component can also be utilized for repairing an old air pipe or for replacing an old air pipe with a new one.

The methods and structures presented above in connection with various embodiments shall not be interpreted as examples limiting the application, but the presented solution can be applied within the scope defined in the appended claims.

## Claims

1. A method for the installation of air pipes for a flue gas air preheater (3), wherein a set of air pipes (7) Is connected to said preheater, the method comprising:
- cutting an air pipe (7) connected to the preheater and detaching the portion of the air pipe (7) that is to be removed from the preheater for replacement,
- fitting a separate new air pipe (7a) in place of the air pipe portion to be removed,
- connecting said new air pipe (7a) to the remaining portion (7b) of the air pipe (7) in a sealed manner, as an extension of it, and
- fixing the new air pipe (7a) to the remaining portion of the air pipe (7) by utilizing a fastening sleeve (13) fixed to the end of the new air pipe (7a) and inserting it in the remaining portion (7b) of the air pipe (7),
the method being **characterized by**:
- connecting the remaining portion (7b) to the fastening sleeve (13) by means of a conical surface (13d) on the outer surface of the fastening sleeve (13), wherein the remaining portion (7b) adheres to the conical surface (13d), and wherein the outer diameter of the conical surface (13d) and the inclination of the flank of the conical surface (13d) being selected such that the end of the remaining portion (7b) adheres tightly and with a sufficient frictional force to the fastening sleeve (13), when the fastening sleeve (13) connected to the new air pipe (7a) is forced into the remaining portion (7b).

2. The method according to claim 1, **characterized by** connecting said new air pipe (7a) to the preheater.

3. The method according to claim 1, **characterized by** fitting a flexible gasket (13f) in a groove on the conical surface (13d) to seal the clearance between the fastening sleeve (13) and the remaining portion (7b) to separate the inner space of the air pipe (7) from the space outside the air pipe (7).

4. The method according to claim 1 or 2, **characterized by** connecting the remaining portion (7b) to the fastening sleeve (13) by means of a mechanical sealing solution (13d, 13f) without welding.

5. The method according to claim 1, **characterized by** straightening and calibrating the inner surface of the end of the remaining portion (7b) after cutting.

6. The method according to claim 1, 2 or 4, **characterized by** fitting one or more flexible gaskets (13f) between the remaining portion (7b) and the fastening sleeve (13) to separate the inner space of the air pipe (7) from the space outside the air pipe (7).

7. The method according to any of the claims 1 to 6, **characterized by** installing said new air pipe (7a) and fastening sleeve (13) to the remaining portion (7b) of the air pipe (7) in such a way that the new air pipe (7a) and the fastening sleeve (13) constitute a finished air pipe component, whose fastening sleeve (13) is a blank to be machined, which blank is, for the installation, machined to a form in which the fastening sleeve (13) is fitted to extend into the remaining portion (7b) of the air pipe (7).

8. A method for the installation of air pipes for a flue gas air preheater (3), wherein a set of air pipes (7) is connected to said preheater, the method comprising:
- cutting an air pipe (7) connected to the preheater and detaching the portion of the air pipe (7) that is to be removed from the preheater for replacement,
- fitting a separate new air pipe (7a) in place of the air pipe portion to be removed,
- connecting the new air pipe (7a) to the remaining portion (7b) of the air pipe (7) in a sealed manner, as an extension of it,
the method being **characterized by**:
- fixing said new air pipe (7a) to the remaining portion of the air pipe (7) without welding by utilizing a right cone formed at the end of the new air pipe (7a), which right cone is inserted in the remaining portion (7b) of the air pipe (7), and by fixing the remaining portion (7b) to said right cone by means of the conical surface on the outer surface of said right cone, wherein the outer diameter of the right cone and the inclination of the flank of the right cone being selected such that the end of the remaining portion (7b) adheres tightly and with a sufficient frictional force to the right cone, when the right cone is forced into the remaining portion (7b).

9. The method according to claim 8, **characterized by** forming the end of the new air pipe by a machine tool for the pipe end.

10. A flue gas air preheater (3) provided with a set of air pipes (7), wherein at least one of said air pipes (7) comprises:
- a first portion (7b) of the air pipe (7), and
- a separate second portion (7a) of the air pipe (7), connected to the first portion (7b) in a sealed manner, as an extension of it,
- wherein the second portion (7a) is connected to the first portion (7b) by means of a fastening sleeve (13) connected to the end of the second portion (7a) and inserted in the first portion (7b),
**characterized in that**
- the first portion (7b) is connected to the fastening sleeve (13) by means of a conical surface (13d) on the outer surface of the fastening sleeve (13), wherein the first portion (7b) adheres to the conical surface (13d), and wherein the outer diameter of the conical surface (13d) and the inclination of the flank of the conical surface (13d) being selected such that the end of the first portion (7b) adheres tightly and with a sufficient frictional force to the fastening sleeve (13), when the fastening sleeve (13) connected to the second portion (7a) is forced into the first portion (7b).

11. The preheater according to claim 10, **characterized in that** the fastening sleeve comprises a flexible gasket (13f) fitted in a groove on the conical surface (13d) to seal the clearance between the fastening sleeve (13) and the first portion (7b) to separate the inner space of the air pipe (7) from the space outside the air pipe (7).

12. The preheater according to claim 10 or 11, **characterized in that** the first portion (7b) is connected to the fastening sleeve (13) by means of a mechanical sealing solution (13d, 13f) without welding.

13. A flue gas air preheater (3) provided with a set of air pipes (7), wherein at least one of said air pipes (7) comprises:
- a first portion (7b) of the air pipe (7), and
- a separate second portion (7a) of the air pipe (7), connected to the first portion (7b) in a sealed manner, as an extension of it,
**characterized in that**:
- the second portion (7a) is connected to the first portion (7b) without welding by utilizing a right cone formed at the end of the second portion (7a), which cone is inserted in the first portion (7b), and the first portion (7b) is connected to said right cone by means of a conical surface on the outer surface of said right cone, wherein the outer diameter of the right cone and the inclination of the flank of the right cone being selected such that the end of the first portion (7b) adheres tightly and with a sufficient frictional force to the right cone, when the right cone is forced into the first portion (7b).

14. An air pipe component for a flue gas air preheater (3), wherein said air pipe component comprises:
- an air pipe (7a), and
- a fastening sleeve (13) with a first end (13a) inserted in the air pipe (7a) and connected to the end of the air pipe (7a), as an extension of it,
- wherein the fastening sleeve further comprises a second end (13c) provided as an extension to the air pipe (7a) and fitted to extend in another corresponding air pipe (7b) for fixing,
**characterized in that**:
- the fastening sleeve (13) further comprises a conical surface (13d) on the outer surface of the fastening sleeve (13), the conical surface being for adhering the corresponding air pipe (7b) to the conical surface (13d), wherein the outer diameter of the conical surface (13d) and the inclination of the flank of the conical surface (13d) being selected such that the end of the corresponding air pipe (7b) adheres tightly and with a sufficient frictional force to the fastening sleeve (13), when the fastening sleeve (13) connected to the air pipe (7a) is forced into the corresponding air pipe (7b).

15. The air pipe component according to claim 14, **characterized in that** the first end (13a) is connected to the end of the first portion (7a) by means of welding.

## Patentansprüche

1. Verfahren zur Installation von Luftleitungen für einen Gichtgas-Luftvorwärmer (3), wobei ein Satz Luftleitungen (7) mit dem Vorwärmer verbunden ist, wobei das Verfahren Folgendes umfasst:
- Schneiden einer Luftleitung (7), die mit dem Vorwärmer verbunden ist, und Abnehmen des Abschnitts der Luftleitung (7), der zu entfernen ist, von dem Vorwärmer zum Auswechseln,
- Montieren einer separaten neuen Luftleitung (7a) anstelle des zu entfernenden Luftleitungsabschnitts,
- Verbinden der neuen Luftleitung (7a) mit dem verbliebenen Abschnitt (7b) der Luftleitung (7) in einer abgedichteten Weise, als eine Verlängerung davon, und
- Befestigen der neuen Luftleitung (7a) an dem verbliebenen Abschnitt der Luftleitung (7) mittels einer Befestigungsmuffe (13), die an dem Ende der neuen Luftleitung (7a) befestigt ist, und Einsetzen in den verbliebenen Abschnitt (7b) der Luftleitung (7),
wobei das Verfahren **gekennzeichnet ist durch**:
- Verbinden des verbliebenen Abschnitts (7b) mit der Befestigungsmuffe (13) mittels einer Konusfläche (13d) an der Außenfläche der Befestigungsmuffe (13), wobei der verbliebene Abschnitt (7b) an der Konusfläche (13d) anhaftet und wobei der Außendurchmesser der Konusfläche (13d) und die Neigung der Flanke der Konusfläche (13d) so gewählt ist, dass das Ende des verbliebenen Abschnitts (7b) fest und mit einer ausreichenden Reibungskraft an der Befestigungsmuffe (13) anhaftet, wenn die Befestigungsmuffe (13), die mit der neuen Luftleitung (7a) verbunden ist, in den verbliebenen Abschnitt (7b) gedrängt wird.

2. Verfahren nach Anspruch 1, **gekennzeichnet durch** Verbinden der neuen Luftleitung (7a) mit dem Vorwärmer.

3. Verfahren nach Anspruch 1, **gekennzeichnet durch** Montieren einer flexiblen Dichtung (13f) in einer Nut in der Konusfläche (13d) zum Abdichten des Spalts zwischen der Befestigungsmuffe (13) und dem verbliebenen Abschnitt (7b), um den Innenraum der Luftleitung (7) von dem Raum außerhalb der Luftleitung (7) zu trennen.

4. Verfahren nach Anspruch 1 oder 2, **gekennzeichnet durch** Verbinden des verbliebenen Abschnitts (7b) mit der Befestigungsmuffe (13) mittels eines mechanischen Dichtungsverfahrens (13d, 13f) ohne Schweißen.

5. Verfahren nach Anspruch 1, **gekennzeichnet durch** Richten und Kalibrieren der Innenfläche des Endes des verbliebenen Abschnitts (7b) nach dem Schneiden.

6. Verfahren nach Anspruch 1, 2 oder 4, **gekennzeichnet durch** Montieren einer oder mehrerer flexibler Dichtungen (13f) zwischen dem verbliebenen Abschnitt (7b) und der Befestigungsmuffe (13), um den Innenraum der Luftleitung (7) von dem Raum außerhalb der Luftleitung (7) zu trennen.

7. Verfahren nach einem der Ansprüche 1 bis 6, **gekennzeichnet durch** Installieren der neuen Luftleitung (7a) und der Befestigungsmuffe (13) an dem verbliebenen Abschnitt (7b) der Luftleitung (7) in einer derartigen Weise, dass die neue Luftleitung (7a) und die Befestigungsmuffe (13) eine fertige Luftleitungskomponente bilden, deren Befestigungsmuffe (13) ein maschinell zu bearbeitender Rohling ist, wobei dieser Rohling, für die Installation, **durch** maschinelle Bearbeitung in eine Form gebracht wird, in der die Befestigungsmuffe (13) so montiert wird, dass sie sich in den verbliebenen Abschnitt (7b) der Luftleitung (7) hinein erstreckt.

8. Verfahren zur Installation von Luftleitungen für einen Gichtgas-Luftvorwärmer (3), wobei ein Satz Luftleitungen (7) mit dem Vorwärmer verbunden wird, wobei das Verfahren Folgendes umfasst:
- Schneiden einer Luftleitung (7), die mit dem Vorwärmer verbunden ist, und Abnehmen des Abschnitts der Luftleitung (7), der zu entfernen ist, von dem Vorwärmer zum Auswechseln,
- Montieren einer separaten neuen Luftleitung (7a) anstelle des zu entfernenden Luftleitungsabschnitts,
- Verbinden der neuen Luftleitung (7a) mit dem verbliebenen Abschnitt (7b) der Luftleitung (7) in einer abgedichteten Weise, als eine Verlängerung davon,
wobei das Verfahren **gekennzeichnet ist durch**:
- Befestigen der neuen Luftleitung (7a) an dem verbliebenen Abschnitt der Luftleitung (7) ohne Schweißen unter Verwendung eines geraden Konus, der am Ende der neuen Luftleitung (7a) ausgebildet ist, wobei dieser gerade Konus in den verbliebenen Abschnitt (7b) der Luftleitung (7) eingeführt wird, und **durch** Befestigen des verbliebenen Abschnitts (7b) mit dem geraden Konus mittels der Konusfläche an der Außenfläche des geraden Konus, wobei der Außendurchmesser des geraden Konus und die Neigung der Flanke des geraden Konus so gewählt sind, dass das Ende des verbliebenen Abschnitts (7b) fest und mit einer ausreichenden Reibungskraft an dem geraden Konus anhaftet, wenn der gerade Konus in den verbliebenen Abschnitt (7b) gedrängt wird.

9. Verfahren nach Anspruch 8, **gekennzeichnet durch** Bilden des Endes der neuen Luftleitung **durch** eine Werkzeugmaschine für das Leitungsende.

10. Gichtgas-Luftvorwärmer (3), der mit einem Satz Luftleitungen (7) versehen ist, wobei mindestens eine der Luftleitungen (7) Folgendes umfasst:
- einen ersten Abschnitt (7b) der Luftleitung (7), und
- einen separaten zweiten Abschnitt (7a) der Luftleitung (7), der mit dem ersten Abschnitt (7b) in einer abgedichteten Weise verbunden ist, als eine Verlängerung davon,
- wobei der zweite Abschnitt (7a) mit dem ersten Abschnitt (7b) unter Verwendung einer Befestigungsmuffe (13) verbunden ist, die mit dem Ende des zweiten Abschnitts (7a) verbunden und in den ersten Abschnitt (7b) eingeführt ist,
**dadurch gekennzeichnet, dass**
- der erste Abschnitt (7b) mit der Befestigungsmuffe (13) mittels einer Konusfläche (13d) an der Außenfläche der Befestigungsmuffe (13) verbunden ist, wobei der erste Abschnitt (7b) an der Konusfläche (13d) anhaftet und wobei der Außendurchmesser der Konusfläche (13d) und die Neigung der Flanke der Konusfläche (13d) so gewählt sind, dass das Ende des ersten Abschnitts (7b) fest und mit einer ausreichenden Reibungskraft an der Befestigungsmuffe (13) anhaftet, wenn die Befestigungsmuffe (13), die mit dem zweiten Abschnitt (7a) verbunden ist, in den ersten Abschnitt (7b) gedrängt wird.

11. Vorwärmer nach Anspruch 10, **dadurch gekennzeichnet, dass** die Befestigungsmuffe eine flexible Dichtung (13f) umfasst, die in einer Nut in der Konusfläche (13d) montiert ist, um den Spalt zwischen der Befestigungsmuffe (13) und dem ersten Abschnitt (7b) abzudichten, um den Innenraum der Luftleitung (7) von dem Raum außerhalb der Luftleitung (7) zu trennen.

12. Vorwärmer nach Anspruch 10 oder 11, **dadurch gekennzeichnet, dass** der erste Abschnitt (7b) mit der Befestigungsmuffe (13) mittels eines mechanischen Dichtungsverfahrens (13d, 13f) ohne Schweißen verbunden ist.

13. Gichtgas-Luftvorwärmer (3), der mit einem Satz Luftleitungen (7) versehen ist, wobei mindestens eine der Luftleitungen (7) Folgendes umfasst:
- einen ersten Abschnitt (7b) der Luftleitung (7), und
- einen separaten zweiten Abschnitt (7a) der Luftleitung (7), der mit dem ersten Abschnitt (7b) in einer abgedichteten Weise verbunden ist, als eine Verlängerung davon,
**dadurch gekennzeichnet, dass**:
- der zweite Abschnitt (7a) mit dem ersten Abschnitt (7b) ohne Schweißen unter Verwendung eines geraden Konus verbunden ist, der am Ende des zweiten Abschnitts (7a) ausgebildet ist, wobei der Konus in den ersten Abschnitt (7b) eingeführt ist und der erste Abschnitt (7b) mit dem geraden Konus mittels einer Konusfläche an der Außenfläche des geraden Konus verbunden ist, wobei der Außendurchmesser des geraden Konus und die Neigung der Flanke des geraden Konus so gewählt sind, dass das Ende des ersten Abschnitts (7b) fest und mit einer ausreichenden Reibungskraft an dem geraden Konus anhaftet, wenn der gerade Konus in den ersten Abschnitt (7b) gedrängt wird.

14. Luftleitungskomponente für einen Gichtgas-Luftvorwärmer (3), wobei die Luftleitungskomponente Folgendes umfasst:
- eine Luftleitung (7a), und
- eine Befestigungsmuffe (13) mit einem ersten Ende (13a), das in die Luftleitung (7a) eingesetzt ist und mit dem Ende der Luftleitung (7a) verbunden ist, als eine Verlängerung davon,
- wobei die Befestigungsmuffe des Weiteren ein zweites Ende (13c) umfasst, das als eine Verlängerung für die Luftleitung (7a) gedacht ist und so montiert ist, dass es sich in einer anderen entsprechenden Luftleitung (7b) erstreckt, um befestigt zu werden, **dadurch gekennzeichnet, dass**:
- die Befestigungsmuffe (13) des Weiteren eine Konusfläche (13d) an der Außenfläche der Befestigungsmuffe (13) umfasst, wobei die Konusfläche dazu dient, die entsprechende Luftleitung (7b) an der Konusfläche (13d) anzuhaften, wobei der Außendurchmesser der Konusfläche (13d) und die Neigung der Flanke der Konusfläche (13d) so gewählt sind, dass das Ende der entsprechenden Luftleitung (7b) fest und mit einer ausreichenden Reibungskraft an der Befestigungsmuffe (13) anhaftet, wenn die Befestigungsmuffe (13), die mit der Luftleitung (7a) verbunden ist, in die entsprechende Luftleitung (7b) gedrängt wird.

15. Luftleitungskomponente nach Anspruch 14, **dadurch gekennzeichnet, dass** das erste Ende (13a) mit dem Ende des ersten Abschnitts (7a) mittels Schweißen verbunden ist.

## Revendications

1. Procédé pour l'installation de tuyaux d'air pour un dispositif de préchauffage (3) d'air de gaz de carneau, dans lequel un ensemble de tuyaux d'air (7) est connecté audit dispositif de préchauffage, le procédé comprenant :
- la coupe d'un tuyau d'air (7) connecté au dispositif de préchauffage et le détachement de la partie du tuyau d'air (7) qui doit être enlevée du dispositif de préchauffage pour remplacement,
- la mise en place d'un nouveau tuyau d'air (7a) séparé à la place de la partie de tuyau d'air à enlever,
- la connexion dudit nouveau tuyau d'air (7a) à la partie restante (7b) du tuyau d'air (7) d'une manière étanche, comme une extension de celui-ci, et
- la fixation du nouveau tuyau d'air (7a) à la partie restante du tuyau d'air (7) en utilisant un manchon de fixation (13) fixé à l'extrémité du nouveau tuyau d'air (7a) et en l'insérant dans la partie restante (7b) du tuyau d'air (7),
le procédé étant **caractérisé par** :
- la connexion de la partie restante (7b) au manchon de fixation (13) au moyen d'une surface conique (13d) sur la surface extérieure du manchon de fixation (13), dans lequel la partie restante (7b) adhère à la surface conique (13d), et dans lequel le diamètre extérieur de la surface conique (13d) et l'inclinaison du flanc de la surface conique (13d) étant choisis de façon à ce que l'extrémité de la partie restante (7b) adhère étroitement et avec une force de frottement suffisante au manchon de fixation (13), lorsque le manchon de fixation (13) connecté au nouveau tuyau d'air (7a) est forcé à l'intérieur de la partie restante (7b).

2. Procédé selon la revendication 1, **caractérisé par** la connexion dudit nouveau tuyau d'air (7a) au dispositif de préchauffage.

3. Procédé selon la revendication 1, **caractérisé par** la mise en place d'un joint flexible (13f) dans une rainure sur la surface conique (13d) pour sceller le jeu entre le manchon de fixation (13) et la partie restante (7b) pour séparer l'espace intérieur du tuyau d'air (7) de l'espace à l'extérieur du tuyau d'air (7).

4. Procédé selon la revendication 1 ou 2, **caractérisé par** la connexion de la partie restante (7b) au manchon de fixation (13) au moyen d'une solution (13d, 13f) mécanique d'étanchéité sans soudure.

5. Procédé selon la revendication 1, **caractérisé par** le dressage et le calibrage de la surface intérieure de l'extrémité de la partie restante (7b) après la coupe.

6. Procédé selon la revendication 1, 2 ou 4, **caractérisé par** la mise en place d'un ou plusieurs joint(s) flexible(s) (13f) entre la partie restante (7b) et le manchon de fixation (13) pour séparer l'espace intérieur du tuyau d'air (7) de l'espace à l'extérieur du tuyau d'air (7).

7. Procédé selon l'une quelconque des revendications 1 à 6, **caractérisé par** l'installation dudit nouveau tuyau d'air (7a) et dudit manchon de fixation (13) sur la partie restante (7b) du tuyau d'air (7) de telle manière que le nouveau tuyau d'air (7a) et le manchon de fixation (13) constituent un composant de tuyau d'air fini, dont le manchon de fixation (13) est un flan à usiner, lequel flan est, pour l'installation, usiné à une forme dans laquelle le manchon de fixation (13) est ajusté pour s'étendre dans la partie restante (7b) du tuyau d'air (7).

8. Procédé pour l'installation de tuyaux d'air pour un dispositif de préchauffage (3) d'air de gaz de carneau, dans lequel un ensemble de tuyaux d'air (7) est connecté audit dispositif de préchauffage, le procédé comprenant :
- la coupe d'un tuyau d'air (7) connecté au dispositif de préchauffage et le détachement de la partie du tuyau d'air (7) qui doit être enlevée du dispositif de préchauffage pour remplacement,
- la mise en place d'un nouveau tuyau d'air (7a) séparé à la place de la partie de tuyau d'air à enlever,
- la connexion du nouveau tuyau d'air (7a) à la partie restante (7b) du tuyau d'air (7) d'une manière étanche, comme une extension de celui-ci,
le procédé étant **caractérisé par** :
- la fixation du nouveau tuyau d'air (7a) à la partie restante du tuyau d'air (7) sans soudure en utilisant un cône droit formé à l'extrémité du nouveau tuyau d'air (7a), lequel cône droit est inséré dans la partie restante (7b) du tuyau d'air (7), et en fixant la partie restante (7b) audit cône droit au moyen de la surface conique sur la surface extérieure dudit cône droit, dans lequel le diamètre extérieur du cône droit et l'inclinaison du flanc du cône droit étant choisis de façon à ce que l'extrémité de la partie restante (7b) adhère étroitement et avec une force de frottement suffisante au cône droit, lorsque le cône droit est forcé à l'intérieur de la partie restante (7b).

9. Procédé selon la revendication 8, **caractérisé par** la formation de l'extrémité du nouveau tuyau d'air par une machine-outil pour l'extrémité de tuyau.

10. Dispositif de préchauffage (3) d'air de gaz de carneau prévu avec un ensemble de tuyaux d'air (7), dans lequel au moins un desdits tuyaux d'air (7) comprend :
- une première partie (7b) du tuyau d'air (7), et
- une deuxième partie (7a) séparée du tuyau d'air (7), connectée à la première partie (7b) d'une manière étanche, comme une extension de celle-ci,
- dans lequel la deuxième partie (7a) est connectée à la première partie (7b) au moyen d'un manchon de fixation (13) connecté à l'extrémité de la deuxième partie (7a) et inséré dans la première partie (7b),
**caractérisé en ce que**
- la première partie (7b) est connectée au manchon de fixation (13) au moyen d'une surface conique (13d) sur la surface extérieure du manchon de fixation (13), dans lequel la première partie (7b) adhère à la surface conique (13d), et dans lequel le diamètre extérieur de la surface conique (13d) et l'inclinaison du flanc de la surface conique (13d) étant choisis de façon à ce que l'extrémité de la première partie (7b) adhère étroitement et avec une force de frottement suffisante au manchon de fixation (13), lorsque le manchon de fixation (13) connecté à la deuxième partie (7a) est forcé à l'intérieur de la première partie (7b).

11. Dispositif de préchauffage selon la revendication 10, **caractérisé en ce que** le manchon de fixation comprend un joint flexible (13f) ajusté dans une rainure sur la surface conique (13d) pour sceller le jeu entre le manchon de fixation (13) et la première partie (7b) pour séparer l'espace intérieur du tuyau d'air (7) de l'espace à l'extérieur du tuyau d'air (7).

12. Dispositif de préchauffage selon la revendication 10 ou 11, **caractérisé en ce que** la première partie (7b) est connectée au manchon de fixation (13) au moyen d'une solution (13d, 13f) mécanique d'étanchéité sans soudure.

13. Dispositif de préchauffage (3) d'air de gaz de carneau prévu avec un ensemble de tuyaux d'air (7), dans lequel au moins un desdits tuyaux d'air (7) comprend :
- une première partie (7b) du tuyau d'air (7), et
- une deuxième partie (7a) séparée du tuyau d'air (7), connectée à la première partie (7b) d'une manière étanche, comme une extension de celle-ci,
**caractérisé en ce que** :
- la deuxième partie (7a) est connectée à la première partie (7b) sans soudure en utilisant un cône droit formé à l'extrémité de la deuxième partie (7a), lequel cône est inséré dans la première partie (7b), et la première partie (7b) est connectée audit cône droit au moyen d'une surface conique sur la surface extérieure dudit cône droit, dans lequel le diamètre extérieur du cône droit et l'inclinaison du flanc du cône droit étant choisis de façon à ce que l'extrémité de la première partie (7b) adhère étroitement et avec une force de frottement suffisante au cône droit, lorsque le cône droit est forcé à l'intérieur de la première partie (7b).

14. Composant de tuyau d'air pour un dispositif de préchauffage (3) d'air de gaz de carneau, dans lequel ledit composant de tuyau d'air comprend :
- un tuyau d'air (7a), et
- un manchon de fixation (13) avec une première extrémité (13a) insérée dans le tuyau d'air (7a) et connectée à l'extrémité du tuyau d'air (7a), comme une extension de celui-ci,
- dans lequel le manchon de fixation comprend en outre une deuxième extrémité (13c) prévue comme une extension du tuyau d'air (7a) et ajustée de façon à s'étendre dans un autre tuyau d'air (7b) correspondant pour fixation,
**caractérisé en ce que** :
- le manchon de fixation (13) comprend en outre une surface conique (13d) sur la surface extérieure du manchon de fixation (13), la surface conique servant à faire adhérer le tuyau d'air (7b) correspondant à la surface conique (13d), dans lequel le diamètre extérieur de la surface conique (13d) et l'inclinaison du flanc de la surface conique (13d) étant choisis de façon à ce que l'extrémité du tuyau d'air (7b) correspondant adhère étroitement et avec une force de frottement suffisante au manchon de fixation (13), lorsque le manchon de fixation (13) connecté au tuyau d'air (7a) est forcé à l'intérieur du tuyau d'air (7b) correspondant.

15. Composant de tuyau d'air selon la revendication 14, **caractérisé en ce que** la première extrémité (13a) est connectée à l'extrémité de la première partie (7a) au moyen d'une soudure.
